# FASCICULE DE BREVET EUROPEEN

(11) **EP 2 529 128 B1**
(45) Date de publication et mention de la délivrance du brevet: **06.11.2013**
(21) Numéro de dépôt: 10809026.7
(22) Date de dépôt: 15.12.2010
(51) Int. Cl.: F16D 43/18

(54) **EMBRAYAGE CENTRIFUGE A HYSTERESIS AVEC ENCLENCHEMENT PAR ENTRAINEMENT DU TAMBOUR EXTERIEUR, FACADE ACCESSOIRE ET VEHICULE COMPORTANT UN TEL EMBRAYAGE**
ZENTRIFUGALKUPPLUNG MIT HYSTERESE UND EINRASTUNG DURCH DEN ANTRIEB DER ÄUSSEREN TROMMEL, ZUBEHÖRVORBAU UND FAHRZEUG MIT EINER DERARTIGEN KUPPLUNG
CENTRIFUGAL CLUTCH WITH HYSTERESIS ENGAGED BY DRIVING OF THE OUTER DRUM, ACCESSORY FRONT END AND VEHICLE COMPRISING SUCH A CLUTCH

(30) Priorité: 27.01.2010 FR 1050545
(43) Date de publication de la demande: 05.12.2012
(73) Titulaire: PSA Peugeot Citroen Automobiles S.A., 78140 Velizy Villacoublay (FR)
(72) Inventeur: LE LIEVRE, Armel, F-78360 Montesson (FR); GIANNONI, Marc, F-75009 Paris (FR); BERGER, Julien, F-75005 Paris (FR); DUMOULIN, Pierre, F-90340 Chevremont (FR); WASCHEUL, Michael, F-78260 Acheres (FR)
(74) Mandataire: Renous Chan, Véronique
(86) Numéro de dépôt international: PCT/FR2010/052747
(87) Numéro de publication internationale: WO 2011/092383

(56) Documents cités:
- DE-A1- 2 057 697
- FR-A- 1 314 103
- JP-A- 61 140 625
- NL-A- 6 904 925
- US-A- 1 870 495
- US-A- 1 870 648

## Description

La présente invention revendique la priorité de la demande française 1050545 déposée le 27 janvier 2010.

La présente invention concerne un embrayage centrifuge à hystérésis avec enclenchement par entraînement du tambour extérieur. L'invention concerne en outre une façade accessoire d'un véhicule automobile ayant un moteur thermique entraînant un vilebrequin comprenant un tel embrayage et une machine électrique de façade, l'embrayage embrayant et débrayant la façade au moteur thermique. L'invention concerne encore un véhicule automobile comprenant une telle façade accessoire entraînant un compresseur de climatisation.

Dans le domaine des véhicules avec groupe moteur thermique, on peut utiliser le moteur thermique pour entraîner différents accessoires du véhicule, par exemple un compresseur de climatisation. On cherche cependant à maintenir un entraînement des différents accessoires lorsque que le moteur thermique est arrêté. Dans le cas d'un accessoire ayant une fonction de climatisation du véhicule, il est connu d'implanter un compresseur de climatisation électrique. L'entraînement du compresseur de climatisation est alors indépendant du fonctionnement du moteur thermique. Cependant un tel compresseur de climatisation présente le désavantage d'une implantation impactant très fortement l'architecture du groupe moteur, l'architecture électrique et électronique du véhicule et l'architecture de la boucle de réfrigération, particulièrement lorsque le véhicule est un véhicule automobile.

De façon classique dans le domaine des véhicules automobiles, le groupe moteur d'un véhicule automobile intègre dans son architecture une façade accessoire permettant l'entraînement des différents accessoires du véhicule. L'entraînement de la façade accessoire est classiquement lié au fonctionnement du moteur thermique. Lorsque le moteur thermique est arrêté, ne pouvant alors plus entraîner la façade accessoire, le document GB 2 446 413 propose une alimentation auxiliaire de la façade accessoire. Il est prévu un embrayage centrifuge entre le moteur thermique et la façade. L'embrayage centrifuge s'enclenche par effet d'inertie lors de la rotation du vilebrequin du moteur thermique. Ainsi lorsque le moteur fonctionne, l'embrayage est enclenché et le moteur entraîne la façade accessoire. Lorsque le moteur est arrêté, l'embrayage est désenclenché, et la façade accessoire peut être entraînée par son alimentation auxiliaire. La phase de redémarrage du moteur thermique avec la façade accessoire entraînée par l'alimentation auxiliaire est la condition de vie critique de la façade.

Le pilotage de la transition entre un entraînement de la façade par alimentation auxiliaire et un entraînement de la façade par moteur thermique est choisi entre deux cas différents.

Dans un premier cas, on anticipe le redémarrage du moteur thermique en coupant l'alimentation auxiliaire avant l'enclenchement de l'embrayage. Ce premier cas présente le désavantage de ne pas assurer la continuité de l'entraînement de la façade accessoire.

Dans un deuxième cas, on attend l'enclenchement de l'embrayage dû au redémarrage du moteur thermique pour arrêter l'alimentation auxiliaire. Pendant un court moment, l'entraînement de la façade accessoire se fait concurremment par l'alimentation auxiliaire et par le moteur thermique. Cette concurrence entre le moteur thermique et l'alimentation auxiliaire conduit à une discontinuité locale de la vitesse d'entraînement de la façade accessoire entre l'alimentation auxiliaire et l'embrayage enclenché. Une telle discontinuité de la vitesse d'entraînement amène un régime transitoire de la façade impactant fortement la durée de vie de la façade.

Il existe donc un besoin pour un système d'entraînement de la façade accessoire de véhicule assurant la continuité de l'entraînement de la façade.

L'état de la technique plus proche est considéré le US-1870495.

Pour cela, l'invention propose un embrayage centrifuge à hystérésis, dans lequel l'embrayage comporte un arbre intérieur de sortie ; un tambour d'entraînement extérieur monté pivotant sur l'arbre intérieur de sortie ; des masselottes montées libres en translation radiale sur le tambour ; un flasque circonscrivant radialement les masselottes, le flasque étant solidaire de l'arbre intérieur de sortie; le déplacement des masselottes au contact du flasque par effet centrifuge entraînant l'enclenchement du tambour d'entraînement extérieur avec l'arbre intérieur de sortie.

Le tambour comprend des doigts s'étendant radialement, les masselottes étant guidées en translation par les doigts du tambour, et les masselottes étant liées entre elles par des ressorts.

Dans une variante, le flasque est de forme cylindrique centrée autour de l'arbre intérieur de sortie, le flasque étant relié solidairement à l'arbre intérieur de sortie par une extension radiale du flasque, une partie extérieure du tambour entourant le flasque, le flasque et l'arbre intérieur de sortie délimitant un logement torique concentrique de l'arbre intérieur de sortie, le logement torique logeant de façon concentrique un roulement du tambour sur l'arbre intérieur, une partie du tambour liée au roulement et comprenant les doigts et les masselottes guidées en translation par les doigts.

Au moins un des doigts comporte, en regard de la masselotte guidée en translation par le doigt, une partie aimantée et/ou un cliquet escamotable dans le doigt selon une direction circonférentielle, la partie aimantée et le cliquet étant des moyens de génération d'un hystérésis.

Avantageusement, la partie aimantée du doigt sollicite la masselotte en contact avec le doigt lorsque la masselotte s'éloigne du flasque.

Avantageusement, la masselotte escamote le cliquet dans le doigt selon une direction circonférentielle lorsque la masselotte s'éloigne du flasque, et dans lequel le cliquet est en saillie du doigt selon une direction circonférentielle lorsque la masselotte se déplace en contact du flasque.

La présente invention a également pour objet une façade accessoire d'un véhicule automobile ayant un moteur thermique entraînant un vilebrequin, la façade accessoire comprenant un embrayage tel que défini ci-dessus, et une machine électrique de façade munie d'un arbre de sortie, la rotation de l'arbre de sortie de la machine électrique entraînant la rotation du tambour de l'embrayage, l'arbre intérieur de sortie de l'embrayage étant relié au vilebrequin du moteur thermique.

Dans une variante, le véhicule comprend un moteur thermique entraînant un vilebrequin, et un compresseur de climatisation du véhicule automobile, dans lequel la rotation du tambour de l'embrayage entraîne un arbre d'entrée du compresseur de climatisation.

Dans une variante, l'arbre de sortie de la machine électrique de façade entraîne la rotation du tambour de l'embrayage via une courroie, et dans lequel la rotation du tambour de l'embrayage entraîne un arbre d'entrée du compresseur de climatisation via la courroie.

Dans une variante, la machine électrique de façade est un moteur réversible en générateur, avec un mode de fonctionnement en moteur transformant l'énergie d'une alimentation électrique du véhicule en rotation de l'arbre de sortie, et un mode de fonctionnement en générateur transformant la rotation de l'arbre de sortie en énergie électrique pour l'alimentation électrique, la rotation du tambour de l'embrayage entraînant la rotation de l'arbre de sortie du moteur électrique.

Dans une variante, la source de l'énergie de déplacement du véhicule est électrique ou thermique selon la vitesse de déplacement du véhicule, la machine électrique de façade entraînant la rotation de l'arbre d'entrée du compresseur de climatisation lorsque la source de l'énergie de déplacement du véhicule est électrique, et le moteur thermique entraînant la rotation de l'arbre d'entrée du compresseur de climatisation lorsque la source de l'énergie de déplacement du véhicule est thermique.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en perspective éclatée d'un embrayage centrifuge selon l'art antérieur ;
- figure 2, une vue en perspective d'une façade accessoire entraînant un compresseur de climatisation et un embrayage selon l'invention ;
- figure 3, un graphique de comportement du régime façade et régime moteur enchaînant une phase de désenclenchement et une phase d'enclenchement de l'embrayage ;
- figure 4, une vue en coupe diamétrale d'un embrayage centrifuge selon l'invention ;
- figure 5, un schéma de principe d'une vue dans le plan diamétral d'un embrayage centrifuge selon l'invention ;
- figure 6, un schéma de principe du guidage en translation d'une masselotte sur un doigt, l'embrayage étant désenclenché ;
- figure 7, un schéma de principe du guidage en translation d'une masselotte sur un doigt, l'embrayage étant enclenché.

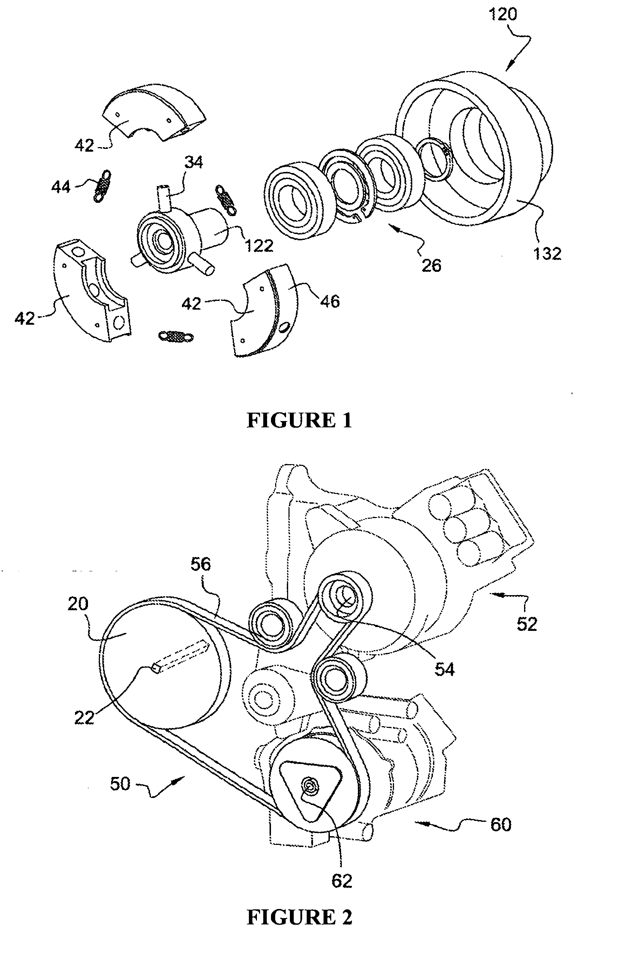

L'invention se rapporte à une façade accessoire de véhicule automobile ayant un moteur thermique entraînant un vilebrequin. En référence à la figure 2, la façade accessoire 50 comprend une machine électrique de façade 52 munie d'un arbre de sortie 54. La façade accessoire 50 comprend en outre un embrayage 20 centrifuge à hystérésis avec enclenchement par entraînement du tambour extérieur. La rotation de l'arbre de sortie 54 entraîne la rotation du tambour extérieur de l'embrayage 20. L'embrayage 20 comprend un arbre intérieur de sortie 22. L'arbre intérieur de sortie est relié au vilebrequin du moteur thermique du véhicule.

Lorsque le vilebrequin est en rotation du fait du fonctionnement du moteur thermique, la façade accessoire 50 et ses accessoires sont entraînés via l'enclenchement de l'embrayage 20. Les fonctions des accessoires entraînés par la façade 50 sont ainsi assurées.

Lorsque le moteur thermique n'est pas en fonctionnement, la façade accessoire 50 est entraînée par la machine électrique de façade 52. Les fonctions des accessoires entraînés par la façade sont ainsi assurées.

La façade accessoire est ainsi toujours susceptible d'être entraînée soit par la machine électrique 52, soit par le moteur thermique.

L'embrayage de l'invention est un embrayage à enclenchement par entraînement du tambour extérieur. L'entraînement du tambour extérieur de l'embrayage 20 tend à enclencher l'embrayage 20 par effet centrifuge. Lorsque la vitesse de rotation du tambour extérieur de l'embrayage 20 atteint un seuil d'enclenchement, l'embrayage 20 s'enclenche, ou embraye, par effet d'inertie.

L'embrayage de l'invention est en outre un embrayage centrifuge à hystérésis. L'enclenchement de l'embrayage 20, acquis par dépassement du seuil d'enclenchement, est maintenu lorsque la vitesse de rotation du tambour extérieur redescend en dessous du seuil d'enclenchement. L'embrayage ne se désenclenche, ou débraye, que si la vitesse de rotation du tambour extérieur tombe sous un seuil de désenclenchement. L'hystérésis permet un changement d'état, enclenché/désenclenché ou désenclenché/enclenché, stable et durable. Les situations où l'embrayage fonctionne en état intermédiaire entre adhérence et glissement sont ainsi éliminées.

L'enclenchement de l'embrayage par entraînement du tambour extérieur permet de démarrer le moteur thermique lors de la transition entre l'entraînement de la façade par alimentation auxiliaire et l'entraînement de la façade par le moteur thermique. Pour effectuer une telle transition, on augmente le régime de la machine électrique 52 de la façade accessoire de manière à dépasse le seuil d'enclenchement de l'embrayage. La façade accessoire 50 entraîne alors progressivement le vilebrequin du moteur thermique en rotation. Le vilebrequin étant en rotation, le moteur thermique peut démarrer.

Avec le démarrage du moteur thermique par la façade accessoire 50, la machine électrique 52 et le moteur thermique entraîne concurremment la façade 50. Pendant cette phase d'entraînement en concurrence, le moteur thermique et la machine électrique entraînent la façade 50 avec la même vitesse : la vitesse de démarrage du moteur thermique. Il n'y a pas de discontinuité locale de la vitesse d'entraînement de la façade accessoire 50 entre la machine électrique 52 et l'embrayage enclenché. On coupe enfin la machine électrique 52 pour laisser le moteur thermique entraîner seul la façade accessoire 50.

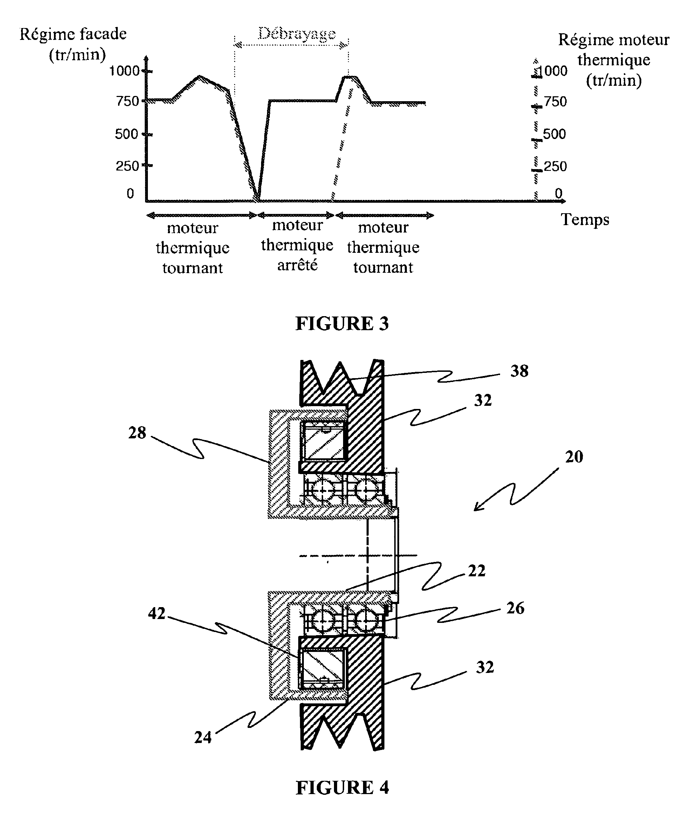

La figure 3 représente un graphique de comportement du régime façade et régime moteur enchaînant une phase de désenclenchement et une phase d'enclenchement de l'embrayage. Le régime moteur thermique en tours par minute de l'embrayage 20, plus particulièrement en tours par minute de l'arbre intérieur de l'embrayage 20, est représenté en courbe pointillée. Le régime façade en tours par minute de l'embrayage 20, plus particulièrement en tours par minute du tambour extérieur de l'embrayage 20, est représenté en courbe pleine.

Dans un premier temps le moteur thermique tourne, l'embrayage 20 a été préalablement enclenché comme nous le verrons plus loin. Le moteur thermique 20 et la façade 50 sont entraînés à la même vitesse. La machine électrique 52 n'entraîne pas la façade 50, car c'est le moteur thermique qui entraîne la façade 50.

Lorsque le régime moteur thermique faiblit, la vitesse d'entraînement de la façade atteint son seuil de désenclenchement. Le tambour de l'embrayage 20 ne tourne plus assez rapidement pour maintenir l'enclenchement par effet d'inertie, le seuil de désenclenchement étant ici à 500 tours par minute. Les régimes façade et moteur thermique chute alors à 0. La machine électrique 52 n'entraîne alors pas encore la façade 50.

Dans un deuxième temps, la machine électrique 52 peut alors être actionné pour permettre le maintien des fonctions des accessoires entraîné par la façade 50. Le régime façade est revenu au régime nominal d'entraînement, ici 750 tours par minute. Lorsque l'on veut redémarrer le moteur thermique, on augmente le régime façade 50 par la machine électrique 52 jusqu'au seuil d'enclenchement, ici 1000 tours par minute. L'embrayage 20 s'enclenche progressivement, entraînant de façon continue le vilebrequin du moteur thermique en rotation. Le régime moteur thermique remonte jusqu'à 1000 tours par minute.

Dans un troisième temps, le moteur thermique est donc redémarré, l'embrayage 20 est toujours enclenché. On peut couper la machine électrique 52 sans craindre une discontinuité de la vitesse d'entraînement de la façade 50 comme le montre le graphique en figure 3. On revient alors à une situation similaire au premier temps.

L'embrayage 20 centrifuge à hystérésis avec enclenchement par entraînement du tambour extérieur permet d'obtenir une façade accessoire de véhicule dont la continuité de l'entraînement de la façade est assurée.

Un mode de réalisation d'un embrayage centrifuge à hystérésis avec enclenchement par entraînement du tambour extérieur est détaillé dans la suite de la description.

L'invention concerne aussi un véhicule automobile comprenant la façade accessoire 50 précédemment décrite. Le véhicule automobile comprend un moteur thermique entraînant un vilebrequin et un compresseur de climatisation 60 du véhicule automobile. Le tambour de l'embrayage 20 de la façade 50 est relié cinématiquement par la façade 50 à l'arbre d'entrée 62 du compresseur de climatisation 60. La rotation du tambour de l'embrayage 20 entraîne alors l'arbre d'entrée 62 du compresseur de climatisation 60.

En référence à la figue 2, l'arbre de sortie 54 de la machine électrique de façade 52 entraîne la rotation du tambour de l'embrayage 20 via une courroie 56. La courroie 56 permet une conception simple de la façade 50. La courroie 56 entraîne alors les différents accessoires de la façade 50. En référence à la figure 2, la courroie 56 entraîne l'arbre d'entrée 62 du compresseur de climatisation 60. De même la rotation du tambour de l'embrayage 20 entraîne l'arbre d'entrée 62 du compresseur de climatisation 60 via la courroie 56.

La rotation du tambour de l'embrayage peut, de façon similaire, entraîner la rotation de l'arbre de sortie 54 de la machine électrique 52.

La machine électrique de façade 52 est alors de préférence un moteur réversible en générateur. La machine électrique 52 comprend d'une part un mode de fonctionnement en moteur transformant l'énergie d'une alimentation électrique du véhicule en rotation de l'arbre de sortie 54. La machine électrique 52 comprend d'autre part un mode de fonctionnement en générateur transformant la rotation de l'arbre de sortie 54 en énergie électrique pour l'alimentation électrique. La fonction réversible de !a machine électrique 52 permet alors d'intégrer la fonction d'alternateur rechargeant la batterie du véhicule en fonctionnement thermique, assurant une plus grande compacité à l'architecture du groupe moteur du véhicule.

Le véhicule tel que précédemment décrit est particulièrement avantageux dans le domaine de véhicules hybrides, encore appelés véhicules avec groupe moteur hybrides.

Les véhicules avec groupe moteur hybrides sont des véhicules dont la source d'énergie de déplacement du véhicule est double : électrique et thermique. Le véhicule possède alors un mode de fonctionnement électrique et un mode de fonctionnement thermique. La source de l'énergie de déplacement du véhicule est électrique ou thermique (i.e. le fonctionnement du véhicule est électrique ou thermique) selon la vitesse de déplacement du véhicule.

En mode de fonctionnement électrique, le moteur thermique peut être arrêté, alors que le véhicule se déplace. Le vilebrequin ne tourne alors plus et la façade accessoire classique n'est plus entraînée, alors que les fonctions des accessoires sont nécessaires au confort du véhicule, comme par exemple la climatisation ou le désembuage.

Dans le véhicule tel que précédemment décrit, la machine électrique de façade 52 entraîne la rotation de l'arbre d'entrée 62 du compresseur de climatisation 60 lorsque la source de l'énergie de déplacement du véhicule est électrique (c'est à dire lorsque le moteur thermique est arrêté). De plus le moteur thermique entraîne la rotation de l'arbre d'entrée 62 du compresseur de climatisation 60 lorsque la source de l'énergie de déplacement du véhicule est thermique.

La continuité de l'entraînement de la façade accessoire d'un tel véhicule est ainsi assurée tout en permettant une intégration des fonctions classiques de démarreur et/ou de l'alternateur dans la façade accessoire 50. Une telle intégration est alors compacte et limite l'impact sur l'architecture du groupe moteur.

L'embrayage centrifuge à hystérésis avec enclenchement par entraînement du tambour extérieur permet d'obtenir un véhicule, possiblement hybride, avec une intégration compacte de tous les composants classiques d'un véhicule thermique.

Dans un embrayage centrifuge classique, représenté en perspective éclatée par la figure 1, des masselottes 42 sont montées libres en translation radiale sur l'arbre intérieur 122. L'arbre intérieur 122 comprend des doigts 34 s'étendant radialement et guidant en translation les masselottes 42. Un tambour extérieur 132 de sortie est monté pivotant sur l'arbre intérieur 122 au moyen d'un roulement 26.

L'enclenchement de l'embrayage 120 se fait par entraînement de l'arbre intérieur 122. De façon plus détaillée, l'entraînement de l'arbre intérieur 122 cause par effet d'inertie le déplacement des masselottes 42 au contact d'un tambour extérieur 132 de l'embrayage 120. L'arbre intérieur 122 est ainsi un arbre intérieur d'entrée de l'embrayage 120 alors que le tambour extérieur 132 est un tambour extérieur de sortie de l'embrayage 120.

Les masselottes 42 sont liées entre elles pas des ressorts 44. Ces ressorts s'entendent sur la circonférence de l'embrayage et assurent un éloignement des masselottes 42 du tambour extérieur 132 lorsque l'effet d'inertie diminue. Les masselottes 42 se rapprochent alors de l'arbre intérieur 122 lors du désenclenchement.

Un mode de réalisation d'un embrayage centrifuge à hystérésis avec enclenchement par entraînement du tambour extérieur est représenté en coupe diamétrale par la figure 4. L'embrayage 20 comporte un arbre intérieur de sortie 22 et un tambour d'entraînement extérieur 32 monté pivotant sur l'arbre de sortie 22. L'embrayage 20 comporte en outre des masselottes 42 montées libres en translation radiale sur le tambour 32.

Les masselottes peuvent être guidés en translation par des doigts 34. Cependant dans l'embrayage centrifuge à hystérésis avec enclenchement par entraînement du tambour extérieur c'est le tambour d'entraînement extérieur 32 qui comprend les doigts 34.

Les masselottes 42 peuvent être liées entre elles par des ressorts 44.

De retour à la figure 4, l'embrayage avec enclenchement par entraînement du tambour extérieur comporte en outre un flasque 24. De préférence, le flaque 24 est de forme cylindrique centré autour de l'arbre intérieur de sortie 22.

Le flasque 24 est solidaire de l'arbre intérieur de sortie 22. De préférence, le flasque 24 est relié solidairement à l'arbre intérieur de sortie 22 par une extension radiale 28 du flasque 24. Le flasque 24 et l'arbre intérieur de sortie 22 délimite alors un logement torique concentrique de l'arbre intérieur de sortie 22. Le logement torique permet la réalisation d'un embrayage 20 compact dont l'intégration dans les façades accessoires n'impacte par l'architecture du groupe moteur.

Le flasque 24 circonscrit radialement les masselottes 42. La rotation du tambour d'entraînement extérieur 32 entraîne par effet centrifuge le déplacement des masselottes 42 au contact du flasque 24. Le déplacement des masselottes 42 au contact du flasque 24 entraîne l'enclenchement du tambour d'entraînement extérieur, lié aux masselottes 42, avec l'arbre intérieur de sortie 22, liée au flasque 24.

Les masselottes 42 peuvent comprendre un revêtement sur leur surface venant au contact du flasque 24 permettant une meilleure adhérence du contact des masselottes 42 avec le tambour extérieur 132.

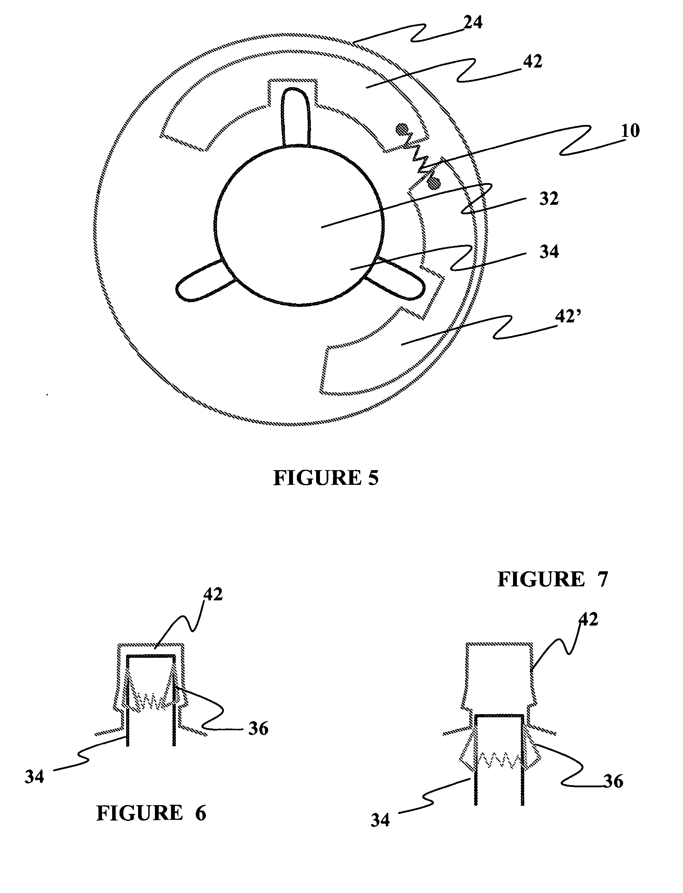

L'embrayage 20 peut être monté pivotant sur l'arbre de sortie 22 au moyen d'un roulement 26. Dans le mode de réalisation préféré de l'embrayage 20 avec un logement torique, le logement torique loge de façon concentrique le roulement du tambour 32 sur l'arbre intérieur de sortie 22 et une partie du tambour d'entraînement extérieur 32 liée au roulement 26. Cette partie du tambour d'entraînement extérieur 32 comprend les doigts 34 comme représenté en figure 5.

Sur cette figure 5, on a de plus représenté un ressort 10, qui relie la masselotte 42 représentée à une autre masselotte 42'. Si d'autres masselottes sont présentes, d'autres ressorts seront prévus. Ces ressorts, en traction, permettent de ramener les masselottes vers le centre lors de l'arrêt en rotation.

En référence à la figure 5, le logement torique, formé par l'arbre intérieur de sortie 22 (non représenté en figure 5) et le flasque 24, loge de manière concentrique les doigts 34 et les masselottes 42 guidés en translation par les doigts 34.

De retour à la figure 4, le tambour d'entraînement extérieur 32 peut comprendre une partie extérieure 38 qui entoure le flasque 24. La partie extérieure 38 permet l'entraînement du tambour 32 par la façade 20. Ainsi lorsque la machine électrique de façade 52 entraîne la rotation du tambour de l'embrayage 20 via la courroie 56, la partie extérieure 38 comprend une bande de roulement permettant au tambour d'entraînement extérieur 32 d'entraîner la courroie 56.

L'embrayage centrifuge à hystérésis avec enclenchement par entraînement du tambour extérieur comporte des moyens de génération d'un hystérésis.

Dans un premier mode de réalisation des moyens de génération d'un hystérésis et en référence aux figures 6 et 7, au moins un des doigts 34, de préférence tous les doigts 34, comporte un cliquet escamotable 36 dans le doigt 34 selon une direction circonférentielle. Le cliquet 36 est en regard de la masselotte 42.

Lorsque la masselotte 42 s'éloigne du flasque 24, la masselotte 42 se rapproche du doigt 34. Dans une telle configuration, représentée en figure 6, la masselotte 42 escamote le cliquet 36 dans le doigt 34 selon une direction circonférentielle, la direction horizontale en figure 6.

Lorsque la masselotte 42 se déplace en contact du flasque 24, la masselotte 42 s'éloigne du doigt 24. Dans une telle configuration, représentée en figure 7, le cliquet 36 est en saillie du doigt 34 selon une direction circonférentielle. Un moyen élastique, un ressort, peut avantageusement forcer le cliquet 36 en saillie du doigt 34 lorsque la masselotte 42 se déplace en contact du flasque 24.

Dans un deuxième mode de réalisation des moyens de génération d'un hystérésis, au moins un des doigt 34, de préférence tout les doigts 34, comporte une partie aimantée en regard de la masselotte 42 guidé en translation par le doigt 34.

Lorsque la masselotte 42 s'éloigne du flasque 24, la masselotte 42 se rapproche du doigt 34. Dans une telle configuration, la partie aimantée du doigt 34 sollicite la masselotte 42 en contact avec le doigt 34.

Lorsque la masselotte 42 se déplace en contact du flasque 24, la masselotte 42 s'éloigne du doigt 34. Dans une telle configuration, la partie aimantée interagit plus faiblement avec la masselotte 42. La présence de la partie aimantée ne modifie alors pas le comportement classique de la masselotte 42 guidé par le doigt 34.

Ce deuxième mode de réalisation des moyens de génération d'un hystérésis est compatible avec le premier mode de réalisation des moyens de génération d'un hystérésis. Dans ces deux modes de réalisation, l'enclenchement et le désenclenchement de l'embrayage 20 ne fait pas intervenir les mêmes phénomènes. Il y a alors formation d'un hystérésis.

On observe que dans les deux modes de réalisation proposés, les forces qui s'opposent à la centrifugation sont supérieures à celles qui permettent le retour des masselottes en position centrale.

L'hystérésis permet de dissocier le seuil d'enclenchement de l'embrayage du seuil de désenclenchement de l'embrayage.

## Revendications

1. Un embrayage (20) centrifuge à hystérésis, dans lequel l'embrayage (20) comporte un arbre intérieur de sortie (22) ; un tambour d'entraînement extérieur (32) monté pivotant sur l'arbre intérieur de sortie (22) ; des masselottes (42) montées libres en translation radiale sur le tambour (32) ; un flasque (24) circonscrivant radialement les masselottes (42), le flasque (24) étant solidaire de l'arbre intérieur de sortie (22); le déplacement des masselottes (42) au contact du flasque (24) par effet centrifuge entraînant l'enclenchement du tambour d'entraînement extérieur (32) avec l'arbre intérieur de sortie (22), les masselottes 42) étant guidées en translation par des doigts (34) s'étendant radialement du tambour (32) et étant liées entre elles par des ressorts (44), **caractérisé en ce qu'**au moins un des doigts (34) comporte, en regard de la masselotte (42) guidée en translation par le doigt (34), une partie aimantée et/ou un cliquet (36) escamotable dans le doigt (34) selon une direction circonférentielle, la partie aimantée et le cliquet (36) étant des moyens de génération d'un hystérésis.

2. L'embrayage selon la revendication 1, dans lequel le flasque (24) est de forme cylindrique centrée autour de l'arbre intérieur de sortie (22), le flasque (24) étant relié solidairement à l'arbre intérieur de sortie (22) par une extension radiale (28) du flasque, une partie extérieure (38) du tambour (32) entourant le flasque (24), le flasque (24) et l'arbre intérieur de sortie (22) délimitant un logement torique concentrique de l'arbre intérieur de sortie (22), le logement torique logeant de façon concentrique un roulement (26) du tambour (32) sur l'arbre intérieur (22), une partie du tambour (32) liée au roulement (26) et comprenant les doigts (34) et les masselottes (42) guidées en translation par les doigts (34).

3. L'embrayage selon la revendication 1 ou la revendication 2, dans lequel la partie aimantée du doigt (34) sollicite la masselotte (42) en contact avec le doigt (34) lorsque la masselotte (42) s'éloigne du flasque (24).

4. L'embrayage selon l'une quelconque des revendications précédentes, dans lequel la masselotte (42) escamote le cliquet (36) dans le doigt (34) selon une direction circonférentielle lorsque la masselotte (42) s'éloigne du flasque (24), et dans lequel le cliquet (36) est en saillie du doigt (34) selon une direction circonférentielle lorsque la masselotte (42) se déplace en contact du flasque (24).

5. Une façade accessoire (50) d'un véhicule automobile ayant un moteur thermique entraînant un vilebrequin, la façade accessoire (50) comprenant un embrayage (20) selon l'une des revendications 1 à 4, et une machine électrique de façade (52) munie d'un arbre de sortie (54), la rotation de l'arbre de sortie (54) de la machine électrique (52) entraînant la rotation du tambour (32) de l'embrayage (20), l'arbre intérieur de sortie (22) de l'embrayage (20) étant relié au vilebrequin du moteur thermique.

6. Un véhicule automobile comprenant une façade accessoire (50) selon la revendication 5, un moteur thermique entraînant un vilebrequin, et un compresseur de climatisation (60) du véhicule automobile, dans lequel la rotation du tambour (32) de l'embrayage (20) entraîne un arbre d'entrée (62) du compresseur de climatisation (60).

7. Le véhicule la revendication 6, dans lequel l'arbre de sortie (54) de la machine électrique de façade (52) entraîne la rotation du tambour de l'embrayage (20) via une courroie (56), et dans lequel la rotation du tambour (32) de l'embrayage (20) entraîne un arbre d'entrée (62) du compresseur de climatisation (60) via la courroie (56).

8. Le véhicule selon l'une des revendications 6 à 7, dans lequel la machine électrique de façade (52) est un moteur réversible en générateur, avec un mode de fonctionnement en moteur transformant l'énergie d'une alimentation électrique du véhicule en rotation de l'arbre de sortie (54), et un mode de fonctionnement en générateur transformant la rotation de l'arbre de sortie (54) en énergie électrique pour l'alimentation électrique, la rotation du tambour (32) de l'embrayage entraînant la rotation de l'arbre de sortie (54) de la machine électrique (52).

9. Le véhicule selon l'une des revendication 6 à 8, dans lequel la source de l'énergie de déplacement du véhicule est électrique ou thermique selon la vitesse de déplacement du véhicule, la machine électrique de façade (52) entraînant la rotation de l'arbre d'entrée (62) du compresseur de climatisation (60) lorsque la source de l'énergie de déplacement du véhicule est électrique, et le moteur thermique entraînant la rotation de l'arbre d'entrée (62) du compresseur de climatisation (60) lorsque la source de l'énergie de déplacement du véhicule est thermique.

## Patentansprüche

1. Zentrifugalkupplung (20) mit Hysterese, bei der die Kupplung (20) eine innere Ausgangswelle (22), eine äußere Antriebstrommel (32), die auf der inneren Ausgangswelle (22) schwenkend montiert ist, Ausgleichsgewichte (42), die in radialer Verschiebung frei auf der Trommel (32) montiert sind, einen Flansch (24), der radial die Ausgleichsgewichte (42) umschreibt, aufweist, wobei der Flansch (24) mit der inneren Ausgangswelle (22) fest verbunden ist, wobei die Verlagerung der Ausgleichsgewichte (42) bei Berührung des Flanschs (24) durch zentrifugale Wirkung, die das Einrücken der äußeren Antriebstrommel (32) mit der inneren Ausgangswelle (22) nach sich zieht, wobei die Ausgleichsgewichte (42) in Verschiebung von Fingern (34) geführt werden, die sich radial von der Trommel (32) ausgehend erstrecken und untereinander durch Federn (44) verbunden sind, **dadurch gekennzeichnet, dass** mindestens einer der Finger (34) gegenüber dem Ausgleichsgewicht (42), das in Verschiebung von dem Finger (34) geführt wird, einen magnetischen Teil und/oder eine Klinke (36), die in dem Finger (34) entlang einer umfänglichen Richtung versenkbar ist, aufweist, wobei der magnetische Teil und die Klinke (36) Mittel zum Erzeugen einer Hysterese sind.

2. Kupplung nach Anspruch 1, bei der der Flansch (24) zylindrische Form hat, die um die innere Ausgangswelle (22) zentriert ist, wobei der Flansch (24) fest mit der inneren Ausgangswelle (22) durch eine radiale Erweiterung (28) des Flanschs verbunden ist, wobei ein äußerer Teil (38) der Trommel (32) den Flansch (24) umgibt, wobei der Flansch (24) und die innere Ausgangswelle (22) eine torische Aufnahme abgrenzen, die mit der inneren Ausgangswelle (22) konzentrisch ist, wobei die torische Aufnahme konzentrisch ein Lager (26) der Trommel (32) auf der inneren Welle (22), einen Teil der Trommel (32) aufnimmt, der mit dem Lager (26) verbunden ist und die Finger (34) und die Ausgleichsgewichte (42), die in Verschiebung von den Fingern (34) geführt werden, aufweist.

3. Kupplung nach Anspruch 1 oder Anspruch 2, bei der der magnetische Teil des Fingers (34) das Ausgleichsgewicht (42) in Berührung mit dem Finger (34) beansprucht, wenn sich das Ausgleichsgewicht (42) von dem Flansch (24) entfernt.

4. Kupplung nach einem der vorhergehenden Ansprüche, bei der das Ausgleichsgewicht (42) die Klinke (36) in den Finger (34) entlang einer umfänglichen Richtung einfährt, wenn sich das Ausgleichsgewicht (42) von dem Flansch (24) entfernt, und wobei die Klinke (36) von dem Finger (34) entlang einer umfänglichen Richtung vorsteht, wenn sich das Ausgleichsgewicht (42) in Berührung mit dem Flansch (24) verlagert.

5. Zubehörfassade (50) eines Kraftfahrzeugs, das einen Verbrennungsmotor hat, der eine Kurbelwelle antreibt, wobei die Zubehörfassade (50) eine Kupplung (20) nach einem der Ansprüche 1 bis 4 und eine elektrische Fassadenmaschine (52) aufweist, die mit einer Ausgangswelle (54) verbunden ist, wobei die Drehung der Ausgangswelle (54) der elektrischen Maschine (52) die Drehung der Trommel (32) der Kupplung (20) bewirkt, wobei die innere Ausgangswelle (22) der Kupplung (20) mit der Kurbelwelle des Verbrennungsmotors verbunden ist.

6. Kraftfahrzeug, das eine Zubehörfassade (50) nach Anspruch 5 aufweist, einen Verbrennungsmotor, der eine Kurbelwelle antreibt und einen Klimaanlagenkompressor (60) des Kraftfahrzeugs, bei dem die Drehung der Trommel (32) der Kupplung (20) eine Eingangswelle (62) des Klimaanlagenkompressors (60) antreibt.

7. Fahrzeug nach Anspruch 6, bei dem die Ausgangswelle (54) der elektrischen Fassadenmaschine (52) die Drehung der Trommel der Kupplung (20) über einen Riemen (56) antreibt, und wobei die Drehung der Trommel (32) der Kupplung (20) eine Eingangswelle (62) des Klimaanlagenkompressors (60) über den Riemen (56) antreibt.

8. Fahrzeug nach einem der Ansprüche 6 bis 7, bei dem die elektrische Fassadenmaschine (52) ein in einen Generator umkehrbarer Motor ist, mit einer Betriebsart als Motor, die Energie in eine Stromversorgung des Fahrzeugs in Drehung der Ausgangswelle (54) umwandelt, und einer Betriebsart als Generator, die die Drehung der Ausgangswelle (54) in elektrische Energie für die elektrische Versorgung umwandelt, wobei die Drehung der Trommel (32) der Kupplung die Drehung der Ausgangswelle (54) der elektrischen Maschine (52) antreibt.

9. Fahrzeug nach einem der Ansprüche 6 bis 8, bei dem die Bewegungsenergiequelle des Fahrzeugs elektrisch oder thermisch je nach der Bewegungsgeschwindigkeit des Fahrzeugs ist, wobei die elektrische Fassadenmaschine (52) die Drehung der Eingangswelle (62) des Klimaanlagenkompressors (60) antreibt, wenn die Bewegungsenergiequelle des Fahrzeugs elektrisch ist, und der Verbrennungsmotor die Drehung der Eingangswelle (62) des Klimaanlagenkompressors (60) antreibt, wenn die Bewegungsenergiequelle des Fahrzeugs thermisch ist.

## Claims

1. A centrifugal clutch (20) with hysteresis, in which the clutch (20) comprises an inner output shaft (22); an outer drive drum (32) mounted such that it can pivot on the inner output shaft (22); flyweights (42) mounted with the freedom to effect a radial translational movement on the drum (32); a flange (24) radially circumscribing the flyweights (42), the flange (24) being integral with the inner output shaft (22); the movement of the flyweights (42) in contact with the flange (24) through a centrifugal effect causing the outer drive drum (32) to engage with the inner output shaft (22), the flyweights (42) being guided in translation by fingers (34) extending radially from the drum (32) and being linked with one another by springs (44), **characterized in that** at least one of the fingers (34) comprises, facing the flyweight (42) guided in translation by the finger (34), a magnetized part and/or a catch (36) retractable in the finger (34) along a circumferential direction, the magnetized part and the catch (36) being means for generating a hysteresis.

2. The clutch according to Claim 1, in which the flange (24) is of cylindrical shape centred around the inner output shaft (22), the flange (24) being connected integrally to the inner output shaft (22) by a radial extension (28) of the flange, an outer part (38) of the drum (32) surrounding the flange (24), the flange (24) and the inner output shaft (22) delimiting a concentric toric housing of the inner output shaft (22), the toric housing accommodating in a concentric manner a bearing (26) of the drum (32) on the inner shaft (22), a part of the drum (32) linked to the bearing (26) and including the fingers (34) and the flyweights (42) guided in translation by the fingers (34) .

3. The clutch according to Claim 1 or Claim 2, in which the magnetized part of the finger (34) acts upon the flyweight (42) in contact with the finger (34) when the flyweight (42) moves away from the flange (24).

4. The clutch according to any one of the preceding claims, in which the flyweight (42) retracts the catch (36) in the finger (34) along a circumferential direction when the flyweight (42) moves away from the flange (24), and in which the catch (36) projects from the finger (34) along a circumferential direction when the flyweight (42) moves in contact with the flange (24).

5. An accessory front end (50) of a motor vehicle having a heat engine driving a crankshaft, the accessory front end (50) including a clutch (20) according to one of Claims 1 to 4, and an electric front end machine (52) provided with an output shaft (54), the rotation of the output shaft (54) of the electric machine (52) driving the rotation of the drum (32) of the clutch (20), the inner output shaft (22) of the clutch (20) being connected to the crankshaft of the heat engine.

6. A motor vehicle including an accessory front end (50) according to Claim 5, a heat engine driving a crankshaft, and an air-conditioning compressor (60) of the motor vehicle, in which the rotation of the drum (32) of the clutch (20) drives an input shaft (62) of the air-conditioning compressor (60).

7. The vehicle of Claim 6, in which the output shaft (54) of the electric front end machine (52) drives the rotation of the drum of the clutch (20) via a belt (56), and in which the rotation of the drum (32) of the clutch (20) drives an input shaft (62) of the air-conditioning compressor (60) via the belt (56).

8. The vehicle according to one of Claims 6 to 7, in which the electric front end machine (52) is a reversible motor as a generator, with a mode of operation in motor mode transforming the energy of an electric supply of the vehicle in rotation of the output shaft (54), and a mode of operation in generator mode transforming the rotation of the output shaft (54) in electrical energy for the electric supply, the rotation of the drum (32) of the clutch driving the rotation of the output shaft (54) of the electric machine (52).

9. The vehicle according to one of Claims 6 to 8, in which the source of the movement energy of the vehicle is electric or thermal according to the speed of movement of the vehicle, the electric front end machine (52) driving the rotation of the input shaft (62) of the air-conditioning compressor (60) when the source of movement energy of the vehicle is electric, and the heat engine driving the rotation of the input shaft (62) of the air-conditioning compressor (60) when the source of the movement energy of the vehicle is thermal.
